# EUROPEAN PATENT SPECIFICATION

(11) **EP 2 993 582 B1**
(45) Date of publication and mention of the grant of the patent: **14.12.2022**
(21) Application number: 15182100.6
(22) Date of filing: 24.08.2015
(51) Int. Cl.: G06F 8/658

(54) **METHOD, APPARATUS AND DEVICE FOR UPGRADING AN OPERATING SYSTEM OF A TERMINAL DEVICE**
VERFAHREN, EINRICHTUNG UND VORRICHTUNG UM EIN BETRIEBSSYSTEM EINES ENDGERÄTES AUFZURÜSTEN
PROCÉDÉ APPAREIL ET DISPOSITIF DE MISE A JOUR D'UN SYSTÈME D'EXPLOITATION D'UN TERMINAL

(30) Priority: 05.09.2014 CN 201410452434
(43) Date of publication of application: 09.03.2016
(73) Proprietor: Xiaomi Inc., Beijing 100085 (CN)
(72) Inventor: FAN, Jialin, 100085 BEIJING (CN); QU, Heng, 100085 BEIJING (CN); ZHANG, Pengfei, 100085 BEIJING (CN)
(74) Representative: Cabinet Beau de Loménie

(56) References cited:
- US-A1- 2004 215 755
- US-A1- 2012 144 379

## Description

### TECHNICAL FIELD

The present disclosure relates to the field of computer technologies and, more particularly, to an upgrading method, an upgrading apparatus and an upgrading device for upgrading a current version of an operating system of a router.

### BACKGROUND

At present, the router has become indispensable in life and work of people, and cannot work without an operating system. With the development of technology, device manufacturers will gradually launch some operating systems of new versions including new functions for optimizing the operating system of the router; therefore, the operating system of the router needs to be upgraded.

In related art, when an operating system of an intermediate version exists between an operating system of a current version and an operating system of a latest version, the operating system of the current version needs to be upgraded to the operating system of the intermediate version, and then the operating system of the intermediate version is upgraded to the operating system of the latest version; in this way, the operating system of the current version can be upgraded to the operating system of the latest version.

In this manner, user validation is needed whenever upgrading from one version to a higher version proximate this version; particularly, when there are many versions between the current version and the final version, user validation is needed for multiple times during the entire upgrading process; thus the upgrading steps are tedious, which decreases the efficiency of upgrading the operating system.

US 2004/215755 A1 discloses a technique for updating a first code version contained in a non-volatile memory of a client device to a second code version using an update package received from an update server via a public network. A plurality of update packages are stored at a remote update server. In one aspect, the update server transfers a server manifest containing version information for the available update packages. After comparing available code versions in the manifest with the onboard code version, the client device may submit a request for the appropriate update package.

US 2012/144379 A1 relates to a system and method for updating software applications installed in a computing device. The system generates an update list, which includes update information of one or more software applications that are determined to be updated according to the current version information and the latest version information. Then the system downloads updates according to the update list and applies the updates to the corresponding software applications in the computer.

### SUMMARY

In order to overcome the problems in the related art, embodiments of the present disclosure provide an upgrading method, an upgrading apparatus and an upgrading device for upgrading a current version of an operating system of a router.

The invention is defined in the independent claims to which reference is now directed. Preferred features are set out in the dependent claims.

According to a first aspect, the disclosure relates to an upgrading method, comprising:
acquiring upgrade files corresponding to a plurality of upgrading versions higher than a current version;
selecting one upgrading version proximate the current version as a reference version, and upgrade the current version to the reference version by using the upgrade file corresponding to the reference version; and
on the basis of the reference version, selecting one upgrading version proximate the reference version as a next reference version, and upgrading the reference version to the next reference version till upgrading to a target version, the target version being the highest version in the plurality of upgrading versions.

In an embodiment, the method further comprises:
generating an upgrade starting prompt according to the acquired upgrade files corresponding to the plurality of upgrading versions;
judging whether an upgrade operation inputted according to the upgrade starting prompt is received; and
if the upgrade operation is received, performing the step of selecting one upgrading version proximate the current version as the reference version, and upgrading the current version to the reference version by using the upgrade file corresponding to the reference version.

In an embodiment, the method further comprises:
if the current version is upgraded to the target version, generating an upgrade success prompt; and
displaying the upgrade success prompt.

In an embodiment, the displaying the upgrade success prompt comprises:
displaying the upgrade success prompt in a local display interface; or, pushing the upgrade success prompt to a preset mobile terminal, so that the upgrade success prompt is displayed on the preset mobile terminal.

In an embodiment, the acquiring the upgrade files corresponding to the plurality of upgrading versions comprises:
detecting whether the current version requires updating;
if the current version requires updating, generating a version updating prompt;
judging whether an update operation inputted according to the version updating prompt is received;
if the update operation is received, generating an upgrade file acquisition request and sending the request to a server; and
receiving the upgrade files which are corresponding to the plurality of upgrading versions higher than the current version and are sent by the server according to the upgrade file acquisition request.

In an embodiment, the selecting one upgrading version proximate the current version as the reference version comprises:
acquiring a version identity of the current version and a version identity of each of the upgrading versions, the version identity comprising: a version number and/or a version generating time;
comparing the version identity of the current version with the version identity of each of the upgrading versions; and
determining one upgrading version having a version identity adjacent to and higher than the version identity of the current version as the reference version.

In an embodiment, the selecting one upgrading version proximate the current version as the reference version comprises:
acquiring a preset version upgrade list from the upgrade file, the upgrade file comprising the preset version upgrade list, and the preset version upgrade list comprising an upgrade sequence of the plurality of upgrading versions; and
determining the upgrading version next to the current version in an upgrade sequence from low to high as the reference version according to the preset version upgrade list.

In an embodiment, the selecting one upgrading version proximate the reference version as the next reference version on the basis of the reference version comprises:
detecting whether the reference version is successfully upgraded;
if the reference version is successfully upgraded, controlling to restart the current version and enter the reference version;
detecting whether the restarting is successful; and

if the restarting is successful, selecting one upgrading version proximate the reference version as the next reference version.

In an embodiment, the upgrading the reference version to the next reference version till upgrading to the target version comprises:
judging whether an upgrading version higher than the next reference version exists in the plurality of upgrading versions;
if the upgrading version higher than the next reference version exists in the plurality of upgrading versions, upgrading the version in sequence to the upgrading version higher than the next reference version, and performing the step of judging whether the upgrading version higher than the next reference version exists in the plurality of upgrading versions; and
if no upgrading version higher than the next reference version exists in the plurality of upgrading versions, determining the next reference version as the target version, and terminating the upgrade.

According to a second aspect, the disclosure relates to an upgrading apparatus, comprising:
an acquisition unit configured to acquire upgrade files corresponding to a plurality of upgrading versions higher than a current version;
a first upgrading unit configured to select one upgrading version proximate the current version as a reference version and upgrade the current version to the reference version by using the upgrade file corresponding to the reference version;
a second upgrading unit configured to, on the basis of the reference version, select one upgrading version proximate the reference version as a next reference version; and
a third upgrading unit configured to upgrade the reference version to the next reference version till upgrading to a target version, the target version being the highest version in the plurality of upgrading versions.

In an embodiment, the apparatus further comprises:
a first generation unit configured to generate a upgrade starting prompt according to the acquired upgrade files corresponding to the plurality of upgrading versions;
a judgment unit configured to judge whether an upgrade operation inputted according to the upgrade starting prompt is received; and
a fourth upgrading unit configured to, if the upgrade operation is received, perform the step of selecting one upgrading version proximate the current version as the reference version, and upgrade the current version to the reference version by using the upgrade file corresponding to the reference version.

In an embodiment, the apparatus further comprises:
a second generation unit configured to, if the current version is upgraded to the target version, generate an upgrade success prompt; and
a display unit configured to display the upgrade success prompt.

In an embodiment, the apparatus further comprises:
a first display subunit configured to display the upgrade success prompt in a local display interface; and
a second display subunit configured to push the upgrade success prompt to a preset mobile terminal, so that the upgrade success prompt is displayed on the preset mobile terminal.

In an embodiment, the acquisition unit comprises:
a first detection subunit configured to detect whether the current version requires updating;
a first generation subunit configured to, if the current version requires updating, generate a version updating prompt;
a first judgment subunit configured to judge whether an update operation inputted according to the version updating prompt is received;
a second generation subunit configured to, if the update operation is received, generate an upgrade file acquisition request;
a sending subunit configured to send the upgrade file acquisition request to a server; and
a receiving subunit configured to receive the upgrade files which are corresponding to the plurality of upgrading versions higher than the current version and are sent by the server according to the upgrade file acquisition request.

In an embodiment, the first upgrading unit comprises:
a first acquisition subunit configured to acquire a version identity of the current version and a version identity of each of the upgrading versions, the version identity comprising: a version number and/or a version generating time;
a comparison subunit configured to compare the version identity of the current version with the version identity of each of the upgrading versions; and
a first determination subunit configured to determine one upgrading version having a version identity adjacent to and higher than the version identity of the current version as the reference version.

In an embodiment, the first upgrading unit comprises:
a second acquisition subunit configured to acquire a preset version upgrade list from the upgrade file, the upgrade file comprising the preset version upgrade list, and the preset version upgrade list comprising an upgrade sequence of the plurality of upgrading versions; and
a second determination subunit configured to determine the upgrading version next to the current version in an upgrade sequence from low to high as the reference version according to the preset version upgrade list.

In an embodiment, the second upgrading unit comprises:
a second detection subunit configured to detect whether the reference version is successfully upgraded;
a control subunit configured to, if the reference version is successfully upgraded, control to restart the current version and enter the reference version;
a third detection subunit configured to detect whether the restarting is successful; and
a selection subunit configured to, if the restarting is successful, select one upgrading version proximate the reference version as the next reference version.

In an embodiment, the third upgrading unit comprises:
a second judgment subunit configured to judge whether an upgrading version higher than the next reference version exists in the plurality of upgrading versions;
an upgrading subunit configured to, if the upgrading version higher than the next reference version exists in the plurality of upgrading versions, upgrade the version in sequence to the upgrading version higher than the next reference version, and perform the step of judging whether an upgrading version higher than the next reference version exists in the plurality of upgrading versions; and
a third determination subunit configured to, if no upgrading version higher than the next reference version exists in the plurality of upgrading versions, determine the next reference version as the target version, and terminate the upgrade.

According to a third aspect, the disclosure relates to an upgrading device, comprising:
a processor; and
a memory for storing instructions executable by the processor;
wherein the processor is configured to:
acquire upgrade files corresponding to a plurality of upgrading versions higher than a current version;
select one upgrading version proximate the current version as a reference version, and upgrade the current version to the reference version by using the upgrade file corresponding to the reference version; and
on the basis of the reference version, select one upgrading version proximate the reference version as a next reference version, and upgrade the reference version to the next reference version till upgrading to a target version, the target version being the highest version in the plurality of upgrading versions.

In an embodiment, the steps of the upgrading method are determined by computer program instructions.

Consequently, according to a fourth aspect, the disclosure relates to a computer program for executing the steps of a upgrading method as described above when this program is executed by a computer.

This program can use any programming language and take the form of source code, object code or a code intermediate between source code and object code, such as a partially compiled form, or any other desirable form.

The disclosure is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present disclosure may include the following advantageous effects.

According to the method provided by embodiments of the present disclosure, the upgrade files corresponding to the plurality of upgrading versions higher than the current version are acquired; one upgrading version proximate the current version is selected as a reference version, and the upgrade file corresponding to the reference version is used to upgrade the current version to the reference version; and on the basis of the reference version, one upgrading version proximate the reference version is selected as a next reference version, and the reference version is upgraded to the next reference version till the version is upgraded to the target version.

In the upgrading method provided by the embodiments of the present disclosure, when a plurality of upgrading versions higher than the current version exist, the upgrade files corresponding to the plurality of upgrading versions higher than the current version are directly acquired, and the current version is upgraded to the target version step-by-step according to the acquired upgrade files without user validation, so that the upgrading process is simplified, thus improving the upgrading efficiency.

Considering that the user needs to know the real time upgrade situation and control the moment of starting upgrade, the method may further include the step of generating a upgrade starting prompt after acquiring the upgrade files corresponding to the plurality of upgrading versions higher than the current version; through the upgrade starting prompt, the user may select to upgrade immediately or upgrade in a proper time thereafter. For example, the upgrading process needs to occupy more memory resources, and then the user may select to upgrade the terminal when fewer of the memory resources of the terminal are occupied, so that the upgrade will not affect the user to use the terminal normally. Moreover, during the upgrading process, user validation is only needed when the upgrade starts; that is, the entire upgrading process needs user validation only once; therefore, the upgrading efficiency is very high.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of an upgrading method, according to an exemplary embodiment.
Fig. 2 is a scene diagram according to an exemplary embodiment.
Fig. 3 is a flow chart of an upgrading method, according to another exemplary embodiment.
Fig. 4 is a block diagram of an upgrading apparatus, according to another exemplary embodiment.
Fig. 5 is a block diagram of an upgrading device, according to another exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

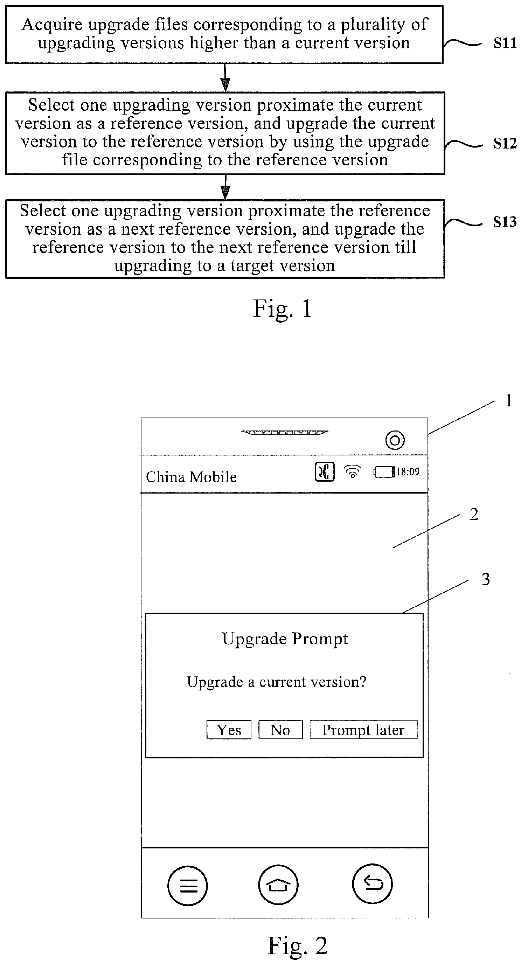

Fig. 1 is a flow chart of an upgrading method, according to an exemplary embodiment. As shown in Fig. 1, the upgrading method may be applied in a terminal, for example a router, a mobile phone or a tablet. The upgrading method provided by the present disclosure may improve the upgrading efficiency, and the method includes the following steps.

In step S11, upgrade files corresponding to a plurality of upgrading versions higher than a current version are acquired.

In this step, a terminal may initiatively access to a server, and request to acquire upgrade files corresponding to a plurality of upgrading versions higher than the current version from the server when determining that updating is required. Moreover, the server may initiatively push an updating message to the terminal, and then the terminal requests to acquire the upgrade files corresponding to the plurality of upgrading versions higher than the current version from the server according to the updating message.

In embodiments of the present disclosure, taking updating an operating system of a router, the operating system of the router has four versions and it is supposed that a current version is version 1, and a plurality of upgrading versions higher than the current version are respectively version 2, version 3 and version 4; moreover, the version 3 is higher than the version 2, and the version 4 is higher than the version 3. In this way, in the step S11, an upgrade file 1-2, an upgrade file 2-3 and an upgrade file 3-4 may be acquired, wherein the upgrade file 1-2 is configured to upgrade the version 1 to the version 2, the upgrade file 2-3 is configured to upgrade the version 2 to the version 3, and the upgrade file 3-4 is configured to upgrade the version 3 to the version 4.

One way for acquiring the upgrade files corresponding to the plurality of upgrading versions higher than the current version is to separately acquire the upgrade file corresponding to each version. In an example, each upgrade file is a package, and in this step, three packages will be respectively acquired. Another way is that the server may compress all the upgrade files into a package. In this case, all the upgrade files corresponding to the plurality of upgrading versions higher than the current version may be acquired at the same time by using one package in this step.

In step S12, one upgrading version proximate the current version is selected as a reference version and the current version is upgraded to the reference version by using the upgrade file corresponding to the reference version.

During version updating, a new version is usually a continuation of the previous version. Generally for software or operating system, the new version is usually obtained by upgrading on the basis of a version lower than the new version by one grade; therefore, during the actual upgrading process, if a certain version needs to be upgraded, usually the version is upgraded to a version higher than this version by one grade, and a highest version can be obtained by upgrading the version step-by-step, i.e., the version cannot be directly upgraded to the highest version without undergoing a plurality of middle versions between the current version and the highest version.

In embodiments of the present disclosure, one upgrading version proximate the current version usually refers to a version next to the current version; for a plurality of versions taking the version number as a recognition identify, the proximal upgrading version refers to a version having a version number next to the version number of the current version. For example: the version number of the current version is v1.1, then in the versions respectively corresponding to v1.2, v1.3 and v1.4, the version corresponding to v1.2 shall be determined as the proximal upgrading version.

Moreover, for a plurality of versions taking the version generating time as a recognition identity, the proximal upgrading version refers to a version corresponding to the generating time having a shortest interval after the generating time of the current version. For example: the version generating time of the current version is 20130303, then in the versions respectively corresponding to the version generating time 20130504, the version generating time 20130607 and the version generating time 20130910, the version corresponding to the version generating time 20130504 shall be determined as the proximal upgrading version.

Taking the operating system of the above router, if it is required to upgrade the version 1 to the version 4, since the version 2 and the version 3 exist between the version 1 and the version 4, the version 1 only can be upgraded step-by-step to the version 4 by using the version 2 and the version 3 during upgrading; that is, the version 1 is firstly upgraded to the version 2, then the version 2 is upgraded to the version 3, and finally the version 3 is upgraded to the version 4.

The version 2 is selected as the upgrading version proximate the version 1, the version 2 is used as the reference version, and then the version 1 is upgraded to the version 2 by using the upgrade file 1-2 corresponding to the version 2.

In step S13, on the basis of the reference version, one upgrading version proximate the reference version is selected as a next reference version, and the reference version is upgraded to the next reference version till the version is upgraded to a target version.

The target version is the highest version in the plurality of upgrading versions.

Taking the operating system of the above router for example, the version 3 is higher than the version 2 by one grade, the version 4 is higher than the version 2 by two grades, and the version 4 is higher than the version 3 by one grade.

After the version 2 is successfully upgraded, if the version 2 needs to be upgraded, the version 2 can only be upgraded to the version 3 which is higher than the version 2 by one grade; therefore, the version 3 higher than the version 2 by one grade is selected as the next reference version and the upgrade file 2-3 is used to upgrade the version 2 to the next reference version, i.e., the version 3.

When the version 3 is successfully upgraded, the version 4 higher than the version 3 by one grade is selected, and the upgrade file 3-4 is used to upgrade the version 3 to the version 4, thus realizing the upgrade from the version 1 to the version 4.

In the embodiment as shown in Fig. 1, the upgrade files corresponding to the plurality of upgrading versions higher than the current version are acquired; one upgrading version proximate the current version is selected as a reference version, and the upgrade file corresponding to the reference version is used to upgrade the current version to the reference version; and on the basis of the reference version, one upgrading version proximate the reference version is selected as a next reference version, and the reference version is upgraded to the next reference version till the version is upgraded to the target version.

In the upgrading method provided by the embodiments of the present disclosure, when a plurality of upgrading versions higher than the current version exist, the upgrade files corresponding to the plurality of upgrading versions higher than the current version are directly acquired, and the current version is upgraded to the target version step-by-step according to the acquired upgrade file without user validation, so that the upgrading process is simplified, and the upgrading efficiency is improved.

Considering that the user needs to know the real time upgrade situation and control the moment for starting the upgrade, the method may further include the step of generating an upgrade starting prompt after acquiring the upgrade files corresponding to the plurality of upgrading versions higher than the current version; through the upgrade starting prompt, the user may select to upgrade immediately or upgrade in a proper time thereafter. For example, the upgrading process needs to occupy more memory resources, and then the user may select to upgrade the terminal when fewer of the memory resources of the terminal are occupied, so that the upgrade will not affect the user to use the terminal normally. Moreover, during the upgrading process, user validation is only needed when the upgrade starts; that is, the entire upgrading process needs user validation once only; therefore, the upgrading efficiency is very high.

In an optional embodiment of the present disclosure, after step S11 and before step S12, the method provided by the present disclosure may further include the following steps.

In step 11), an upgrade starting prompt is generated according to the acquired upgrade files corresponding to the plurality of upgrading versions.

In step 12), whether receiving an upgrade operation inputted according to the upgrade starting prompt is judged.

In step 13), when the upgrade operation is received, step S12 is performed.

Fig. 2 shows a terminal 1 and a display interface 2, wherein an upgrade starting prompt is displayed to a user in a pop-up box 3 on the display interface 2. In other embodiments, for facilitating the operation of the user, as shown in Fig. 2, such operation controls as "Yes", "No", and "Prompt Later" may also be added in the pop-up box 3, so that the user may quickly input corresponding operations according to the upgrade starting prompt.

The upgrade starting prompt is configured to prompt the user that upgrade can be performed and the user may select to upgrade immediately or upgrade in a proper time thereafter according to the upgrade starting prompt. For example, the user may select to start upgrading the terminal when fewer of the memory resources of the terminal are occupied.

For example, the user is playing a game, and the game has occupied large amounts of the memory resources of the terminal; if an automatic upgrade is performed at this moment, the smoothness for the user to play the game will be affected since a large proportion of memory resources would be occupied by the upgrading process; however, by using the upgrade starting prompt, the user may upgrade the terminal after the game is ended, in this way, the smoothness for the user to play the game is ensured, that is, the user will not be affected to play the game due to excessive memory resources occupied by the upgrading process.

Further, the pop-up box 3 may include a version name of each upgrading version higher than the current version; if the user does not select one upgrading version in the pop-up box 3, then the terminal regards the highest version as the target version by default. If the user performs an operation of selecting one upgrading version in the pop-up box 3, then the terminal receives the operation, acquires the version selected by the user in the operation, and determines this version as the target version.

In another optional embodiment of the present disclosure, after step S13, the method provided by the present disclosure may further include the following steps.

In step 21), whether the version having be upgraded to the target version is judged.

Usually the target version is the highest version stored in a server. At this moment, whether the version identity of the upgraded version and the version identity of the highest version being the same is judged; if the two version identities are the same, then it is determined that the version is upgraded to the target version; and if the two version identities are different, then it is determined that the version is not upgraded to the target version.

Moreover, the target version may be one version, higher than the current version and lower than the highest version, selected by the user in the pop-up box 3. Taking the operating system of the above router for example, it is supposed that the user only wants to upgrade the version 1 to the version 3 rather than the version 4 due to such issues as limited network flow, then the user may perform the operation of selecting the version 3 in the pop-up box 3; after that, the terminal receives the operation of the user, acquires the version 3 selected by the user in the operation, and determines the version 3 as the target version.

In step 22), when the version is upgraded to the target version, an upgrade success prompt is generated.

In step 23), the upgrade success prompt is displayed.

When displaying the upgrade success prompt, the following manners may be adopted: displaying the upgrade success prompt in a local display interface; or, pushing the upgrade success prompt to a preset mobile terminal, so that the upgrade success prompt is displayed on a display interface of the preset mobile terminal, wherein the display interface may be a display screen and the like. Moreover, the form of pop-up box which is as shown in Fig. 2 may be adopted for displaying the upgrade success prompt in the local display interface.

During the practical application, if the terminal has already been equipped with a display interface, for example, a mobile phone or a tablet, then the upgrade success prompt may be directly displayed in the local display interface. If the terminal is not equipped with a display interface, for example, a router and a switch, then the upgrade success prompt may be pushed to a preset mobile terminal equipped with a display interface, so that the upgrade success prompt can be displayed in the display interface on the preset mobile terminal.

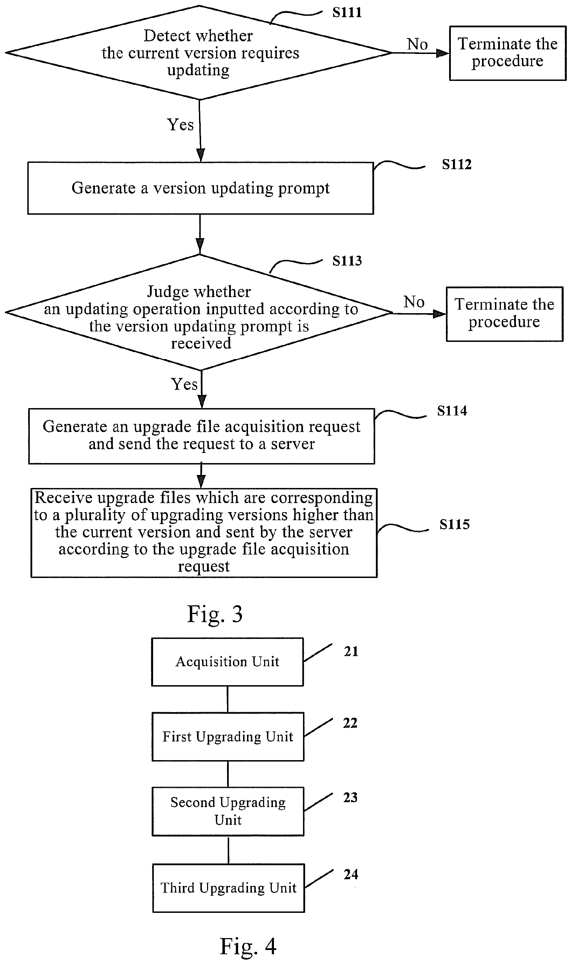

In another optional embodiment of the present disclosure, as shown in Fig. 3, the step S11 may be implemented through the following procedures of step S111 to step S115.

In step S111, whether the current version requires updating is detected; if yes, step S112 is performed; and if no, the procedure is ended.

A terminal sends a detection request to a server, wherein the detection request carries a version identity of the current version, and the version identity may either be a version number or a version generating time.

The server receives the detection request, extracts the version identity of the current version from the detection request, and compares the version identity of the current version with the version identity of a highest version locally stored in the server.

If the version number of the highest version is larger than the version number of the current version, or the version generating time of the highest version is later than the version generating time of the current version, then it is determined that the current version requires upgrading, and first instruction information is generated and sent to the terminal, the first instruction information being configured to instruct the terminal that the current version requires updating. If the version number of the highest version is smaller than or equal to the version number of the current version, or the version generating time of the highest version is earlier than or equal to the version generating time of the current version, then it is determined that the current version does not require upgrading, and second instruction information is generated and sent to the terminal, the second instruction information being configured to instruct the terminal that the current version does not require updating.

The terminal receives the instruction information sent by the server. If the instruction information is the first instruction information, then it is determined that the current version requires updating. If the instruction information is the second instruction information, then it is determined that the current version does not require updating, and the operation is ended.

For example, it is supposed that the version number of the version 1 is V1.1 and the version generating time thereof is 20130303; the version number of the version 2 is V1.2 and the version generating time is 20130504; the version number of the version 3 is V1.3 and the version generating time is 20130607; and the version number of the version 4 is V1.4 and the version generating time is 20130910.

The terminal sends a detection request to the server, the detection request carrying a version identity of the version 1.

For example, the version identity refers to the version number, i.e., the version identity of the version 1 is the version number V1.1.

The server receives the detection request, extracts the version number VI.1 of the version 1 from the detection request, acquires the version number V1.4 of the version 4 (the highest version stored locally), and compares the version number V1.1 of the version 1 with the version number V1.4 of the version 4. The version number V1.1 of the version 1 being smaller than the version number V1.4 of the version 4, then it is determined that the version 1 requires upgrading, and first instruction information is generated and sent to the terminal, the first instruction information being configured to instruct the terminal that the version 1 requires upgrading.

For example, the version identity refers to the version generating time, i.e., the version identity of the version 1 is the version generating time 20130303.

The server receives the detection request, extracts the version generating time 20130303 of the version 1 from the detection request, acquires the version generating time 20130910 of the version 4 (the highest version stored locally), and compares the version generating time 20130303 of the version 1 with the version generating time 20130910 of the version 4. The version generating time 20130303 of the version 1 being earlier than the version generating time 20130910 of the version 4, then it is determined that the version 1 requires upgrading, and first instruction information is generated and sent to the terminal, the first instruction information being configured to instruct the terminal that the version 1 requires upgrading.

The terminal receives the first instruction information sent by the server, and determines that the version 1 requires updating.

In step S112, a version updating prompt is generated.

When the current version requires updating, a version updating prompt as shown in Fig. 2 may be generated, and the version updating prompt may be displayed in the local display interface of the terminal. The version updating prompt may also be sent to a preset mobile terminal; the preset mobile terminal receives the version updating prompt and displays the version updating prompt in the local display interface of the preset mobile terminal.

In step S113, whether receiving an update operation inputted according to the version updating prompt is judged. If the update operation is received, then step S114 is performed. If the update operation is not received, then the flow is ended.

For example, the user may tap "Yes" button in the version updating prompt as shown in Fig. 2 to input the update operation.

In step S114, an upgrade file acquisition request is generated and sent to the server.

When the terminal receives the update operation, an acquisition request for acquiring the upgrade files corresponding to the plurality of upgrading versions higher than the current version is generated and sent to the server, the acquisition request carrying a version identity of the current version.

The server receives the acquisition request, extracts the version identity of the current version from the acquisition request, acquires the version identities of the plurality of upgrading versions higher than the current version locally, acquires the upgrade files corresponding to the plurality of upgrading versions higher than the current version according to the version identity of the current version and the version identities of the plurality of upgrading versions higher than the current version, and sends the acquired upgrade files to the terminal.

Taking the operating system of the above router for example, the terminal generates an acquisition request for acquiring the upgrade files of the plurality of upgrading versions higher than the version 1 and sends the acquisition request to the server, the acquisition request carrying a version identity of the version 1.

The server receives the acquisition request, extracts the version identity of the version 1 from the acquisition request, and acquires the version identities of the upgrading versions higher than the version 1, i.e., the version 2, the version 3 and the version 4; moreover, the version 3 is higher than the version 2, and the version 4 is higher than the version 3.

The upgrade file 1-2 for upgrading the version 1 to the version 2, the upgrade file 2-3 for upgrading the version 2 to the version 3, and the upgrade file 3-4 for upgrading the version 3 to the version 4 are acquired according to the version identity of the version 1, the version identity of the version 2, the version identity of the version 3 and the version identity of the version 4. Moreover, the upgrade file 1-2, the upgrade file 2-3 and the upgrade file 3-4 are sent to the terminal.

In step S115, the upgrade files, which are corresponding to the plurality of upgrading versions higher than the current version and are sent by the server according to the upgrade file acquisition request, are received.

For example, the terminal receives the upgrade file 1-2, the upgrade file 2-3 and the upgrade file 3-4 sent by the server.

In embodiments of the present disclosure, the upgrade files corresponding to the plurality of upgrading versions higher than the current version are acquired whenever detecting that the current version requires updating, and upgrading is performed according to the acquired upgrade files. That is, as long as an upgrading version higher than the current version exists, the corresponding upgrade files thereof are acquired, and the current version is upgraded to the highest version according to the upgrade files; in this way, the version is ensured to be the highest one in most of time, so that the demand of the user may be better satisfied.

In another optional embodiment of the present disclosure, the step S12 may be implemented through the following manner.

One manner may be implemented through the following procedures of step 31 to step 33.

in step 31), a version identity of the current version and a version identity of each of the upgrading versions are acquired, the version identity being a version number and/or a version generating time.

For example, it is supposed that the version number of the version 1 is V1.1 and the version generating time thereof is 20130303; the version number of the version 2 is V1.2 and the version generating time thereof is 20130504; the version number of the version 3 is V1.3 and the version generating time thereof is 20130607; and the version number of the version 4 is V1.4 and the version generating time thereof is 20130910.

In step 32), the version identity of the current version is compared with the version identity of each of the upgrading versions.

For example, if the version identity is the version generating time, then the version generating time 20130303 of the version 1 is respectively compared with the generating time 20130504 of the version 2, the generating time 20130607 of the version 3 and the generating time 20130910 of the version 4. It may be derived that the time interval between the version generating time 20130303 of the version 1 and the version generating time 20130504 of the version 2 is the shortest.

In step 33), one upgrading version having a version identity adjacent to and higher than the version identity of the current version is determined as the reference version.

For example, since the time interval between the version generating time 20130303 of the version 1 and the version generating time 20130504 of the version 2 is the shortest, then the version 2 is determined as the reference version.

The step S12 is implemented through the following procedures of step 41 and step 42.

In step 41), a preset version upgrade list is acquired from the upgrade file, the upgrade file including the preset version upgrade list, and the preset version upgrade list including an upgrade sequence of the plurality of upgrading versions.

The preset version upgrade list may be as shown in Table 1 below, and the version upgrade list includes version names of the version 2, the version 3 and the version 4. The upgrade sequence of the version 2, the version 3 and the version 4 is: the version 2, the version 3 and the version 4.

**Table 1**

| Version Name | Version Sequence |
|---|---|
| Version 2 | 1 |
| Version 3 | 2 |
| Version 4 | 3 |

In step 42), the upgrading version next to the current version in an upgrade sequence from low to high is determined as the reference version according to the preset version upgrade list.

For example, the upgrading version (i.e., the version 2) next to the current version (i.e.., the version 1) is determined as the reference version.

In this method, it is not required to acquire the version identity of each of the upgrading versions, and it is not required to determine the upgrade sequence according to the version identities of the upgrading versions. Instead, the upgrade sequence can be directly determined according to the preset version upgrade list, so that the upgrading step is simplified, and the upgrading efficiency is improved.

In another optional embodiment of the present disclosure, in step S13, the selection of one upgrading version proximate the reference version, on the basis of the reference version, as the next reference version may be implemented through the procedures of step 51 to step 54.

in step 51), whether the reference version being successfully upgraded is detected.

Taking the operating system of the router in the embodiment as shown in Fig. 1 for example, the detection of whether the reference version is successfully upgraded in this step may be: detecting whether the version 2 is successfully upgraded.

In step 52), when the reference version is successfully upgraded, the current version is controlled to restart and enter the reference version.

When the version 2 is successfully upgraded, the version 1 may be controlled to restart, so that the router runs the operating system of the version 2.

In step 53), whether the restarting being successful is detected.

In step 54), when the restarting is successful, one upgrading version proximate the reference version is selected as a next reference version.

For example, when the restarting is successful, one upgrading version (i.e., the version 3) proximate the reference version (i.e., the version 2) is selected as the next reference version.

In another optional embodiment of the present disclosure, in step S13, the upgrading the reference version to the next reference version till the version is upgraded to the target version may be implemented through the following steps.

In step 61), whether an upgrading version higher than the next reference version existing in the plurality of upgrading versions is judged; if yes, then step 62) is performed; and if no, then step 63) is performed.

Taking the operating system of the router in the embodiment as shown in Fig. 1 for example, in this step, the reference version (i.e., the version 2) is upgraded to the next reference version (i.e., the version 3), where the specific upgrade steps will not be elaborated. It may be derived according to the preset version upgrade list that an upgrading version (i.e., the version 4) higher than the next reference version (i.e., the version 3) also exists, then step S12 is performed.

In step 62), the version is upgraded in sequence to the upgrading versions higher than the next reference version, and then return to step 61).

For example, the next reference version (i.e., the version 3) is upgraded to the upgrading version (i.e., the version 4), and the procedure returns to step 61).

In step 63), the next reference version is determined as the target version and the upgrade is ended.

For example, the version 4 is determined as the target version and the upgrade is ended.

Fig. 4 is a block diagram of an upgrading apparatus, according to an exemplary embodiment. The upgrading apparatus provided by the present disclosure may improve the upgrading efficiency. Referring to Fig. 4, the apparatus includes an acquisition unit 21, a first upgrading unit 22, a second upgrading unit 23 and a third upgrading unit 24.

The acquisition unit 21 is configured to acquire upgrade files corresponding to a plurality of upgrading versions higher than a current version.

The first upgrading unit 22 is configured to select one upgrading version proximate the current version as a reference version and upgrade the current version to the reference version by using the upgrade file corresponding to the reference version.

The second upgrading unit 23 is configured to, on the basis of the reference version, select one upgrading version proximate the reference version as a next reference version.

The third upgrading unit 24 is configured to upgrade the reference version to the next reference version till the version is upgraded to a target version, the target version being the highest version in the plurality of upgrading versions.

In the embodiment as shown in Fig. 4, the upgrade files corresponding to the plurality of upgrading versions higher than the current version are acquired; one upgrading version proximate the current version is selected as a reference version, and the upgrade file corresponding to the reference version is used to upgrade the current version to the reference version; and on the basis of the reference version, one upgrading version proximate the reference version is selected as a next reference version, and the reference version is upgraded to the next reference version till the reference version is upgraded to the target version.

In the upgrading method provided by the embodiments of the present disclosure, when a plurality of upgrading versions higher than the current version exist, the upgrade files corresponding to the plurality of upgrading versions higher than the current version are directly acquired, and the current version is upgraded to the target version step-by-step according to the acquired upgrade files without user validation, so that the upgrading process is simplified, and the upgrading efficiency is improved.

Considering that the user needs to know the real time upgrade situation and control the moment of starting the upgrade, the method may further include the step of generating an upgrade starting prompt after acquiring the upgrade files corresponding to the plurality of upgrading versions higher than the current version; through the upgrade starting prompt, the user may select to upgrade immediately or upgrade in a proper time thereafter. For example, the upgrading process needs to occupy more memory resources, and the user may select to upgrade the terminal when fewer of the memory resources of the terminal are occupied, so that the upgrade will not affect the user to use the terminal normally. Moreover, during the upgrading process, user validation is only needed when the upgrade starts; that is, the entire upgrading process needs user validation only once; therefore, the upgrading efficiency is very high.

In another optional embodiment of the present disclosure, the apparatus further includes a first generation unit, a judgment unit and a fourth upgrading unit.

The first generation unit is configured to generate an upgrade starting prompt according to the acquired upgrade files corresponding to the plurality of upgrading versions.

The judgment unit is configured to judge whether an upgrade operation inputted according to the upgrade starting prompt is received.

The fourth upgrading unit is configured to, when the upgrade operation is received, perform the step of selecting one upgrading version proximate the current version as the reference version, and upgrade the current version to the reference version by using the upgrade file corresponding to the reference version.

In another optional embodiment of the present disclosure, the apparatus further includes a second generation unit and a display unit.

The second generation unit is configured to, when the current version is upgraded to the target version, generate an upgrade success prompt.

The display unit is configured to display the upgrade success prompt.

In another optional embodiment of the present disclosure, the display unit includes a first display subunit and a second display subunit.

The first display subunit is configured to display the upgrade success prompt in a local display interface.

The second display subunit is configured to push the upgrade success prompt to a preset mobile terminal, so that the upgrade success prompt is displayed on the preset mobile terminal.

In another optional embodiment of the present disclosure, the acquisition unit 21 includes a first detection subunit, a first generation subunit, a first judgment subunit, a second generation subunit, a sending subunit and a receiving subunit.

The first detection subunit is configured to detect whether the current version requires updating.

The first generation subunit is configured to, when the current version requires updating, generate a version updating prompt.

The first judgment subunit is configured to judge whether an update operation inputted according to the version updating prompt is received.

The second generation subunit is configured to, when the update operation is received, generate an upgrade file acquisition request.

The sending subunit is configured to send the upgrade file acquisition request to a server.

The receiving subunit is configured to receive the upgrade files which are corresponding to the plurality of upgrading versions higher than the current version and are sent by the server according to the upgrade file acquisition request.

In another optional embodiment of the present disclosure, the first upgrading unit 22 includes a first acquisition subunit, a comparison subunit and a first determination subunit.

The first acquisition subunit is configured to acquire a version identity of the current version and a version identity of each of the upgrading versions, the version identity including: a version number and/or a version generating time.

The comparison subunit is configured to compare the version identity of the current version with the version identity of each of the upgrading versions.

The first determination subunit is configured to determine one upgrading version having a version identity adjacent to and higher than the version identity of the current version as the reference version.

In another optional embodiment of the present disclosure, the first upgrading unit 22 includes a second acquisition subunit and a second determination subunit.

The second acquisition subunit is configured to acquire a preset version upgrade list from the upgrade file, the upgrade file including the preset version upgrade list, and the preset version upgrade list including an upgrade sequence of the plurality of upgrading versions.

The second determination subunit is configured to determine the upgrading version next to the current version in an upgrade sequence from low to high as the reference version according to the preset version upgrade list.

In another optional embodiment of the present disclosure, the second upgrading unit 23 includes a second detection subunit, a control subunit, a third detection subunit and a selection subunit.

The second detection subunit is configured to detect whether the reference version is successfully upgraded.

The control subunit is configured to, when the reference version is successfully upgraded, control to restart the current version and enter the reference version.

The third detection subunit is configured to detect whether the restarting is successful.

The selection subunit is configured to, when the restarting is successful, select one upgrading version proximate the reference version as a next reference version.

In another optional embodiment of the present disclosure, the third upgrading unit 24 includes a second judgment subunit, an upgrading subunit and a third determination subunit.

The second judgment subunit is configured to judge whether an upgrading version higher than the next reference version exists in the plurality of upgrading versions.

The upgrading subunit is configured to, when the upgrading version higher than the next reference version exists in the plurality of upgrading versions, upgrade the version in sequence to the upgrading version higher than the next reference version, and perform the step of judging whether the upgrading version higher than the next reference version exists in the plurality of upgrading versions.

The third determination subunit is configured to, when no upgrading version higher than the next reference version exists in the plurality of upgrading versions, determine the next reference version as the target version, and terminate the upgrade.

With respect to the apparatuses in the above embodiments, the specific manners for performing operations for individual modules therein have been described in detail in the embodiments regarding the methods, which will not be elaborated herein.

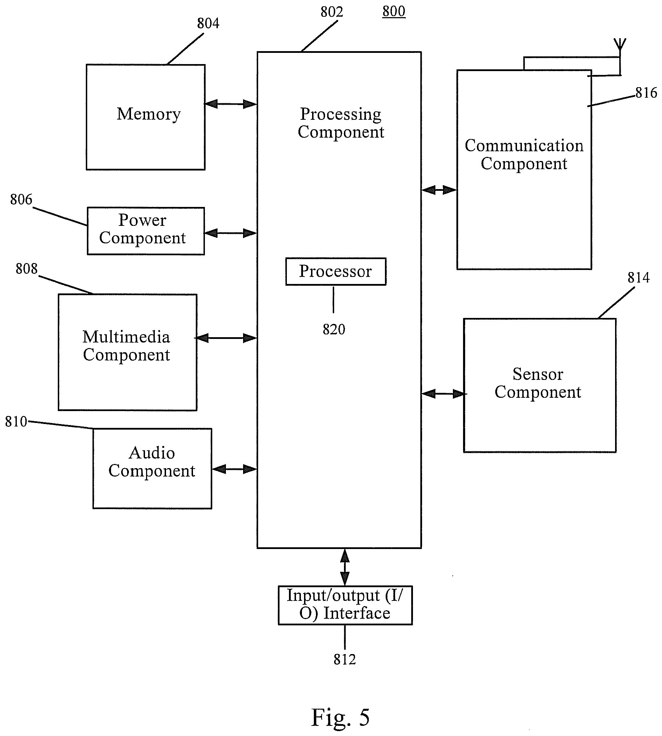

Fig. 5 is a block diagram of an upgrading device 800, according to an exemplary embodiment. For example, the device 800 may be a mobile phone, a computer, a digital broadcast terminal, a messaging apparatus, a gaming console, a tablet, a medical apparatus, exercise device, a personal digital assistant, and the like.

Referring to Fig. 5, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other device. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 804, executable by the processor 820 in the apparatus 800, for performing the above-described methods. For example, the non-transitory computer-readable storage medium may be a ROM, a RAM, a CD-ROM, a magnetic tape, a floppy disc, an optical data storage apparatus, and the like.

A non-transitory computer readable storage medium, when an instruction in a storage medium is performed by a processor of an device 800, enables the device 800 to perform a method, wherein the method includes:
acquiring upgrade files corresponding to a plurality of upgrading versions higher than a current version;
selecting one upgrading version proximate the current version as a reference version, and upgrading the current version to the reference version by using the upgrade file corresponding to the reference version; and
on the basis of the reference version, selecting one upgrading version proximate the reference version as a next reference version, and upgrading the reference version to the next reference version and till upgrading to a target version, the target version being the highest version in the plurality of upgrading versions.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. A method for upgrading a current version of an operating system of a router, the method comprising:
acquiring (S11) upgrade files;
selecting (S12) one upgrading version proximate the current version as a reference version, and upgrading the current version to the reference version by using the upgrade file corresponding to the reference version; and
on the basis of the reference version, selecting (S13) one upgrading version proximate the reference version as a next reference version, and upgrading the reference version to the next reference version till upgrading to a target version,
**characterized in that** the upgrade files correspond to a plurality of upgrading versions higher than the current version, the target version being the highest version in the plurality of upgrading versions, and **in that** the step (S12) of selecting one upgrading version proximate the current version as the reference version comprises:
acquiring a preset version upgrade list from the acquired upgrade files, the acquired upgrade files comprising the preset version upgrade list, and the preset version upgrade list comprising an upgrade sequence of the plurality of upgrading versions; and,
determining the upgrading version next to the current version in the upgrade sequence from low to high as the reference version according to the preset version upgrade list.

2. The method according to claim 1, wherein the method further comprises:
generating an upgrade starting prompt according to the acquired upgrade files corresponding to the plurality of upgrading versions;
judging whether an upgrade operation inputted according to the upgrade starting prompt is received; and
if the upgrade operation is received, performing the step (S12) of selecting one upgrading version proximate the current version as the reference version, and upgrading the current version to the reference version by using the upgrade file corresponding to the reference version.

3. The method according to claim 1, wherein the method further comprises:
if the current version is upgraded to the target version, generating an upgrade success prompt; and
displaying the upgrade success prompt;
the displaying step of the upgrade success prompt comprising:
displaying the upgrade success prompt in a local display interface; or, pushing the upgrade success prompt to a preset mobile terminal, so that the upgrade success prompt is displayed on the preset mobile terminal.

4. The method according to claim 1, wherein the step (S11) of acquiring the upgrade files corresponding to the plurality of upgrading versions comprises:
detecting (S111) whether the current version requires updating;
if the current version requires updating, generating (S112) a version updating prompt and displaying the version updating prompt to a user on a display interface;
judging (S113) whether an update operation inputted by the user according to the version updating prompt is received;
if the update operation is received, generating (S114) an upgrade file acquisition request and sending the request to a server; and
receiving (S115) upgrade files which are corresponding to a plurality of upgrading versions higher than the current version and are sent by the server according to the upgrade file acquisition request.

5. The method according to any one of claims 1 to 4, wherein the step of (S12) selecting one upgrading version proximate the reference version as the next reference version on the basis of the reference version comprises:
detecting whether the reference version is successfully upgraded;
if the reference version is successfully upgraded, controlling to restart the current version and enter the reference version;
detecting whether the restarting is successful; and
if the restarting is successful, selecting one upgrading version proximate the reference version as the next reference version.

6. The method according to any one of claims 1 to 5 wherein the step (S13) of upgrading the reference version to the next reference version till upgrading to the target version comprises:
judging whether an upgrading version higher than the next reference version exists in the plurality of upgrading versions;
if the upgrading version higher than the next reference version exists in the plurality of upgrading versions, upgrading in sequence the upgrading version higher than the next reference version, and performing the step of judging whether an upgrading version higher than the next reference version exists in the plurality of upgrading versions; and
if no upgrading version higher than the next reference version exists in the plurality of upgrading versions, determining the next reference version as the target version, and terminating the upgrade.

7. An apparatus for upgrading a current version of an operating system of a router, the apparatus comprising:
an acquisition unit (21) configured to acquire upgrade files;
a first upgrading unit (22) configured to select one upgrading version proximate the current version as a reference version and upgrade the current version to the reference version by using the upgrade file corresponding to the reference version;
a second upgrading unit (23) configured to, on the basis of the reference version, select one upgrading version proximate the reference version as a next reference version; and,
a third upgrading unit (24) configured to upgrade the reference version to the next reference version till upgrading to a target version,
**characterized in that** the upgrade files correspond to a plurality of upgrading versions higher than the current version, the target version being the highest version in the plurality of upgrading versions, and **in that** the first upgrading unit (22) comprises:
a second acquisition subunit configured to acquire a preset version upgrade list from the acquired upgrade files, the acquired upgrade files comprising the preset version upgrade list, and the preset version upgrade list comprising an upgrade sequence of the plurality of upgrading versions; and,
a second determination subunit configured to determine the upgrading version next to the current version in an upgrade sequence from low to high as the reference version according to the preset version upgrade list.

8. The apparatus according to claim 7, wherein the apparatus further comprises:
a first generation unit configured to generate an upgrade starting prompt according to the acquired upgrade files corresponding to the plurality of upgrading versions;
a judgment unit configured to judge whether an upgrade operation inputted according to the upgrade starting prompt is received; and
a fourth upgrading unit configured to, if the upgrade operation is received, perform the step of selecting one upgrading version proximate the current version as the reference version and upgrade the current version to the reference version by using the upgrade file corresponding to the reference version.

9. The apparatus according to claim 7, wherein the apparatus further comprises:
a second generation unit configured to, if the current version is upgraded to the target version, generate an upgrade success prompt; and
a display unit configured to display the upgrade success prompt;
the display unit comprising:
a first display subunit configured to display the upgrade success prompt in a local display interface; and
a second display subunit configured to push the upgrade success prompt to a preset mobile terminal, so that the upgrade success prompt is displayed on the preset mobile terminal.

10. The apparatus according to claim 7, wherein the acquisition unit (21) comprises:
a first detection subunit configured to detect whether the current version requires updating;
a first generation subunit configured to, if the current version requires updating, generate a version updating prompt, the version updating prompt being displayed to a user on a display interface;
a first judgment subunit configured to judge whether an update operation inputted by the user according to the version updating prompt is received;
a second generation subunit configured to, if the update operation is received, generate an upgrade file acquisition request;
a sending subunit configured to send the upgrade file acquisition request to a server; and
a receiving subunit configured to receive the upgrade files which are corresponding to the plurality of upgrading versions higher than the current version and are sent by the server according to the upgrade file acquisition request.

11. A computer program product including instructions for executing the steps of an upgrading method according to any one of claims 1 to 6 when said instructions are executed by a computer.

12. A recording medium readable by a computer and having recorded thereon a computer program including instructions for executing the steps of an upgrading method according to any one of claims 1 to 6.

## Patentansprüche

1. Verfahren zum Aktualisieren einer aktuellen Version eines Betriebssystems eines Routers, wobei das Verfahren umfasst:
Erlangen von (S11) Aktualisierungsdateien,
Auswählen (S12) einer Aktualisierungsversion, die der aktuellen Version am nächsten liegt, als Referenzversion, und Aktualisieren der aktuellen Version auf die Referenzversion unter Verwendung der Aktualisierungsdatei, die der Referenzversion entspricht, und
Auswählen (S13), basierend auf der Referenzversion, einer Aktualisierungsversion, die der Referenzversion am nächsten liegt, als nächste Referenzversion, und Aktualisieren der Referenzversion auf die nächste Referenzversion bis zur Aktualisierung auf eine Zielversion,
**dadurch gekennzeichnet,**
**dass** die Aktualisierungsdateien einer Mehrzahl von Aktualisierungsversionen entsprechen, die höher sind als die aktuelle Version, wobei die Zielversion die höchste Version in der Mehrzahl von Aktualisierungsversionen ist, und
**dass** der Schritt (S12) des Auswählens einer Aktualisierungsversion, die der aktuellen Version am nächsten ist, als die Referenzversion umfasst:
Erlangen einer voreingestellten Versions-Aktualisierungsliste aus den erlangten Aktualisierungsdateien, wobei die erlangten Aktualisierungsdateien die voreingestellte Versions-Aktualisierungsliste umfassen und die voreingestellte Versions-Aktualisierungsliste eine Aktualisierungsreihenfolge der Mehrzahl von Aktualisierungsversionen umfasst, und,
Bestimmen der Aktualisierungsversion, die in der Aktualisierungsreihenfolge von unten nach oben neben der aktuellen Version liegt, als Referenzversion gemäß der voreingestellten Versions-Aktualisierungsliste.

2. Verfahren nach Anspruch 1, wobei das Verfahren ferner umfasst:
Erzeugen einer Aufforderung zum Starten der Aktualisierung entsprechend den erlangten Aktualisierungsdateien, die der Mehrzahl von Aktualisierungsversionen entsprechen,
Beurteilen, ob eine Aktualisierungshandlung, die gemäß der Aufforderung zum Starten der Aktualisierung eingegeben wurde, empfangen wurde, und
wenn die Aktualisierungshandlung empfangen wurde, Durchführen des Schritts (S12) des Auswählens einer Aktualisierungsversion, die der aktuellen Version am nächsten ist, als die Referenzversion, und des Aktualisierens der aktuellen Version auf die Referenzversion unter Verwendung der Aktualisierungsdatei, die der Referenzversion entspricht.

3. Verfahren nach Anspruch 1, wobei das Verfahren ferner umfasst:
Erzeugen einer Aktualisierungserfolgsmeldung, wenn die aktuelle Version auf die Zielversion aktualisiert ist, und
Anzeigen der Aktualisierungserfolgsmeldung,
wobei der Schritt des Anzeigens der Aktualisierungserfolgsmeldung umfasst:
Anzeigen der Aktualisierungserfolgsmeldung auf einer lokalen Anzeigeschnittstelle oder Senden der Aktualisierungserfolgsmeldung an ein voreingestelltes mobiles Endgerät, so dass die Aktualisierungserfolgsmeldung auf dem voreingestellten mobilen Endgerät angezeigt wird.

4. Verfahren nach Anspruch 1, wobei der Schritt (S11) des Erlangens der Aktualisierungsdateien, die der Mehrzahl von Aktualisierungsversionen entsprechen, umfasst:
Feststellen (S111), ob die aktuelle Version aktualisiert werden muss,
wenn die aktuelle Version aktualisiert werden muss, Erzeugen (S112) einer Aufforderung zur Versionsaktualisierung und Anzeigen der Aufforderung zur Versionsaktualisierung für einen Benutzer auf einer Anzeigeschnittstelle,
Beurteilen (S113), ob eine vom Benutzer gemäß der Aufforderung zur Versionsaktualisierung eingegebene Aktualisierungshandlung empfangen wurde,
wenn die Aktualisierungshandlung empfangen wurde, Erzeugen (S114) einer Aktualisierungsdatei-Erlangungsanforderung und Senden der Anforderung an einen Server, und
Empfangen (S115) von Aktualisierungsdateien, die einer Mehrzahl von Aktualisierungsversionen entsprechen, die höher sind als die aktuelle Version, und die von dem Server gemäß der Aktualisierungsdatei-Erlangungsanforderung gesendet werden.

5. Verfahren nach einem der Ansprüche 1 bis 4, wobei der Schritt (S12) des Auswählens einer Aktualisierungsversion, die der Referenzversion am nächsten liegt, als nächste Referenzversion auf der Grundlage der Referenzversion umfasst:
Feststellen, ob die Referenzversion erfolgreich aktualisiert wurde,
wenn die Referenzversion erfolgreich aktualisiert wurde, Steuern, um die aktuelle Version neu zu starten und die Referenzversion einzugeben,
Feststellen, ob der Neustart erfolgreich war, und,
wenn der Neustart erfolgreich war, Auswählen einer der Referenzversion nächstgelegenen Aktualisierungsversion als nächste Referenzversion.

6. Verfahren nach einem der Ansprüche 1 bis 5, wobei der Schritt (S13) des Aktualisierens der Referenzversion auf die nächste Referenzversion bis zum Aktualisieren auf die Zielversion umfasst:
Beurteilen, ob in der Mehrzahl der Aktualisierungsversionen eine höhere Version als die nächste Referenzversion existiert,
wenn eine Aktualisierungsversion, die höher als die nächste Referenzversion ist, in der Mehrzahl der Aktualisierungs-Versionen existiert, Aktualisieren in Reihenfolge der Aktualisierungsversion, die höher als die nächste Referenzversion ist, und Durchführen des Schritts des Beurteilens, ob eine Aktualisierungsversion, die höher als die nächste Referenzversion ist, in der Mehrzahl der Aktualisierungsversionen existiert, und,
wenn in der Mehrzahl der Aktualisierungsversionen keine höhere Version als die nächste Referenzversion existiert, bestimmen der nächsten Referenzversion als Zielversion und Beenden der Aktualisierung.

7. Vorrichtung zum Aktualisieren einer aktuellen Version eines Betriebssystems eines Routers, wobei die Vorrichtung umfasst:
eine Erlangungseinheit (21), die dazu konfiguriert ist, Aktualisierungsdateien zu erlangen,
eine erste Aktualisierungseinheit (22), die dazu konfiguriert ist, eine Aktualisierungsversion, die der aktuellen Version am nächsten liegt, als eine Referenzversion auszuwählen und die aktuelle Version unter Verwendung der der Referenzversion entsprechenden Aktualisierungsdatei auf die Referenzversion zu aktualisieren,
eine zweite Aktualisierungseinheit (23), die dazu konfiguriert ist, auf der Grundlage der Referenzversion eine Aktualisierungsversion, die der Referenzversion am nächsten liegt, als nächste Referenzversion auszuwählen, und,
eine dritte Aktualisierungseinheit (24), die dazu konfiguriert ist, die Referenzversion auf die nächste Referenzversion zu aktualisieren, bis auf eine Zielversion aktualisiert wird,
**dadurch gekennzeichnet,**
**dass** die Aktualisierungsdateien einer Mehrzahl von Aktualisierungsversionen entsprechen, die höher sind als die aktuelle Version, wobei die Zielversion die höchste Version in der Mehrzahl von Aktualisierungsversionen ist, und
**dass** die erste Aktualisierungseinheit (22) umfasst:
eine zweite Erlangungsuntereinheit, die dazu konfiguriert ist, eine voreingestellte Versions-Aktualisierungsliste aus den erlangten Aktualisierungsdateien zu erlangen, wobei die erlangten Aktualisierungsdateien die voreingestellte Versions-Aktualisierungsliste umfassen und die voreingestellte Versions-Aktualisierungsliste eine Aktualisierungsreihenfolge aus der Mehrzahl von Aktualisierungsversionen umfasst, und,
eine zweite Bestimmungsuntereinheit, die dazu konfiguriert ist, die Aktualisierungsversion neben der aktuellen Version in einer Aktualisierungssequenz von niedrig bis hoch als die Referenzversion gemäß der voreingestellten Versions-Aktualisierungsliste zu bestimmen.

8. Vorrichtung nach Anspruch 7, wobei die Vorrichtung ferner umfasst:
eine erste Erzeugungseinheit, die dazu konfiguriert ist, eine Aufforderung zum Starten einer Aktualisierung entsprechend den erlangten Aktualisierungsdateien, die der Mehrzahl von Aktualisierungsversionen entsprechen, zu erzeugen,
eine Beurteilungseinheit, die dazu konfiguriert ist, zu beurteilen, ob eine gemäß der Aufforderung zum Starten der Aktualisierung eingegebener Aktualisierungshandlung empfangen wurde, und
eine vierte Aktualisierungseinheit, die dazu konfiguriert ist, den Schritt des Auswählens einer Aktualisierungsversion, die der aktuellen Version am nächsten ist, als die Referenzversion durchzuführen, wenn die Aktualisierungshandlung empfangen wurde, und die aktuelle Version unter Verwendung der Aktualisierungsdatei, die der Referenzversion entspricht, auf die Referenzversion zu aktualisieren.

9. Vorrichtung nach Anspruch 7, wobei die Vorrichtung ferner umfasst:
eine zweite Erzeugungseinheit, die dazu konfiguriert ist, eine Aktualisierungserfolgsmeldung zu erzeugen, wenn die aktuelle Version auf die Zielversion aktualisiert wurde, und
eine Anzeigeeinheit, die dazu konfiguriert ist, die Aktualisierungserfolgsmeldung anzuzeigen,
wobei die Anzeigeeinheit umfasst:
eine erste Anzeigeuntereinheit, die dazu konfiguriert ist, die Aktualisierungserfolgsmeldung in einer lokalen Anzeigeschnittstelle anzuzeigen, und
eine zweite Anzeigeuntereinheit, die dazu konfiguriert ist, die Aktualisierungserfolgsmeldung an ein voreingestelltes mobiles Endgerät zu senden, so dass die Aktualisierungs-Erfolgsmeldung auf dem voreingestellten mobilen Endgerät angezeigt wird.

10. Vorrichtung nach Anspruch 7, wobei die Erlangungseinheit (21) umfasst:
eine erste Erkennungsuntereinheit, die dazu konfiguriert ist, zu erkennen, ob die aktuelle Version aktualisiert werden muss,
eine erste Erzeugungsuntereinheit, die dazu konfiguriert ist, eine Aufforderung zur Versionsaktualisierung zu erzeugen, wenn die aktuelle Version aktualisiert werden muss, wobei die Aufforderung zur Versionsaktualisierung einem Benutzer auf einer Anzeigeoberfläche angezeigt wird,
eine erste Beurteilungsuntereinheit, die dazu konfiguriert ist, zu beurteilen, ob eine Aktualisierungshandlung, die von dem Benutzer gemäß der Aufforderung zur Versionsaktualisierung eingegeben wurde, empfangen wurde,
eine zweite Erzeugungsuntereinheit, die dazu konfiguriert ist, eine Anforderung zum Erlangen einer Aktualisierungsdatei zu erzeugen, wenn die Aktualisierungshandlung empfangen wurde,
eine Sendeuntereinheit, die dazu konfiguriert ist, die Anforderung zum Erlangen der Aktualisierungsdatei an einen Server zu senden, und
eine Empfangsuntereinheit, die dazu konfiguriert ist, die Aktualisierungsdateien zu empfangen, die der Mehrzahl von Aktualisierungsversionen entsprechen, die höher sind als die aktuelle Version, und die von dem Server gemäß der Anforderung zum Erlangen der Aktualisierungsdatei gesendet werden.

11. Computerprogrammprodukt mit Anweisungen zum Ausführen der Schritte eines Aktualisierungsverfahrens nach einem der Ansprüche 1 bis 6, wenn die Anweisungen von einem Computer ausgeführt werden.

12. Aufzeichnungsmedium, das von einem Computer gelesen werden kann und auf dem ein Computerprogramm aufgezeichnet ist, das Anweisungen zum Ausführen der Schritte eines Aktualisierungsverfahrens gemäß einem der Punkte 1 bis 6 von enthält.

## Revendications

1. Procédé pour la mise à niveau d'une version actuelle d'un système d'exploitation d'un routeur, le procédé comprenant :
l'acquisition (S11) de fichiers de mise à niveau ;
la sélection (S12) d'une version de mise à niveau proche de la version actuelle en tant que version de référence, et la mise à niveau de la version actuelle vers la version de référence en utilisant le fichier de mise à niveau correspondant à la version de référence ; et
sur la base de la version de référence, la sélection (S13) d'une version de mise à niveau proche de la version de référence en tant que version de référence suivante, et la mise à niveau de la version de référence vers la version de référence suivante jusqu'à la mise à niveau vers une version cible,
**caractérisé en ce que** les fichiers de mise à niveau correspondent à une pluralité de versions de mise à niveau plus récentes que la version actuelle, la version cible étant la version la plus récente dans la pluralité de versions de mise à niveau, et **en ce que** l'étape (S12) de sélection d'une version de mise à niveau proche de la version actuelle en tant que version de référence comprend :
l'acquisition d'une liste de mise à niveau de version prédéfinie à partir des fichiers de mise à niveau acquis, les fichiers de mise à niveau acquis comprenant la liste de mise à niveau de version prédéfinie, et la liste de mise à niveau de version prédéfinie comprenant une séquence de mise à niveau de la pluralité de versions de mise à niveau ; et,
la détermination de la version de mise à niveau qui suit la version actuelle dans la séquence de mise à niveau de la plus ancienne à la plus récente en tant que version de référence selon la liste de mise à niveau de version prédéfinie.

2. Procédé selon la revendication 1, dans lequel le procédé comprend en outre :
la génération d'une invite de démarrage de mise à niveau selon les fichiers de mise à niveau acquis correspondant à la pluralité de versions de mise à niveau ;
l'évaluation de si une opération de mise à niveau entrée selon l'invite de démarrage de mise à niveau est reçue ; et
si l'opération de mise à niveau est reçue, la réalisation de l'étape (S12) de sélection d'une version de mise à niveau proche de la version actuelle en tant que version de référence, et de mise à niveau de la version actuelle vers la version de référence en utilisant le fichier de mise à niveau correspondant à la version de référence.

3. Procédé selon la revendication 1, dans lequel le procédé comprend en outre :
si la version actuelle est mise à niveau vers la version cible, la génération d'une invite de succès de mise à niveau ; et
l'affichage de l'invite de succès de mise à niveau ;
l'étape d'affichage de l'invite de succès de mise à niveau comprenant :
l'affichage de l'invite de succès de mise à niveau dans une interface d'affichage locale ; ou, la poussée de l'invite de succès de mise à niveau vers un terminal mobile prédéfini, de sorte que l'invite de succès de mise à niveau soit affichée sur le terminal mobile prédéfini.

4. Procédé selon la revendication 1, dans lequel l'étape (S11) d'acquisition des fichiers de mise à niveau correspondant à la pluralité de versions de mise à niveau comprend :
la détection (S111) de si la version actuelle nécessite une mise à jour ;
si la version actuelle nécessite une mise à jour, la génération (S112) d'une invite de mise à jour de version et l'affichage de l'invite de mise à jour de version pour un utilisateur sur une interface d'affichage ;
l'évaluation (S113) de si une opération de mise à jour entrée par l'utilisateur selon l'invite de mise à jour de version est reçue ;
si l'opération de mise à jour est reçue, la génération (S114) d'une requête d'acquisition de fichiers de mise à niveau et l'envoi de la requête à un serveur ; et
la réception (S115) de fichiers de mise à niveau qui correspondent à une pluralité de versions de mise à niveau plus récentes que la version actuelle et sont envoyés par le serveur selon la requête d'acquisition de fichiers de mise à niveau.

5. Procédé selon l'une quelconque des revendications 1 à 4, dans lequel l'étape de (S12) sélection d'une version de mise à niveau proche de la version de référence en tant que version de référence suivante sur la base de la version de référence comprend :
la détection de si la version de référence est mise à niveau avec succès ;
si la version de référence est mise à niveau avec succès, la réalisation d'une commande pour redémarrer la version actuelle et accéder à la version de référence ;
la détection de si le redémarrage est effectué avec succès ; et
si le redémarrage est effectué avec succès, la sélection d'une version de mise à niveau proche de la version de référence en tant que version de référence suivante.

6. Procédé selon l'une quelconque des revendications 1 à 5 dans lequel l'étape (S13) de mise à niveau de la version de référence vers la version de référence suivante jusqu'à la mise à niveau vers la version cible comprend :
l'évaluation de si une version de mise à niveau plus récente que la version de référence suivante existe dans la pluralité de versions de mise à niveau ;
si la version de mise à niveau plus récente que la version de référence suivante existe dans la pluralité de versions de mise à niveau, la mise à niveau en séquence de la version de mise à niveau plus récente que la version de référence suivante, et la réalisation de l'étape d'évaluation de si une version de mise à niveau plus récente que la version de référence suivante existe dans la pluralité de versions de mise à niveau ; et
si aucune version de mise à niveau plus récente que la version de référence suivante n'existe dans la pluralité de versions de mise à niveau, la détermination de la version de référence suivante en tant que version cible, et l'achèvement de la mise à niveau.

7. Appareil pour la mise à niveau d'une version actuelle d'un système d'exploitation d'un routeur, l'appareil comprenant :
une unité d'acquisition (21) configurée pour acquérir des fichiers de mise à niveau ;
une première unité de mise à niveau (22) configurée pour sélectionner une version de mise à niveau proche de la version actuelle en tant que version de référence et mettre à niveau la version actuelle vers la version de référence en utilisant le fichier de mise à niveau correspondant à la version de référence ;
une deuxième unité de mise à niveau (23) configurée pour, sur la base de la version de référence, sélectionner une version de mise à niveau proche de la version de référence en tant que version de référence suivante ; et,
une troisième unité de mise à niveau (24) configurée pour mettre à niveau la version de référence vers la version de référence suivante jusqu'à la mise à niveau vers une version cible,
**caractérisé en ce que** les fichiers de mise à niveau correspondent à une pluralité de versions de mise à niveau plus récentes que la version actuelle, la version cible étant la version la plus récente dans la pluralité de versions de mise à niveau, et **en ce que** la première unité de mise à niveau (22) comprend :
une seconde sous-unité d'acquisition configurée pour acquérir une liste de mise à niveau de version prédéfinie à partir des fichiers de mise à niveau acquis, les fichiers de mise à niveau acquis comprenant la liste de mise à niveau de version prédéfinie, et la liste de mise à niveau de version prédéfinie comprenant une séquence de mise à niveau de la pluralité de versions de mise à niveau ; et,
une seconde sous-unité de détermination configurée pour déterminer la version de mise à niveau qui suit la version actuelle dans une séquence de mise à niveau de la plus ancienne à la plus récente en tant que version de référence selon la liste de mise à niveau de version prédéfinie.

8. Appareil selon la revendication 7, dans lequel l'appareil comprend en outre :
une première unité de génération configurée pour générer une invite de démarrage de mise à niveau selon les fichiers de mise à niveau acquis correspondant à la pluralité de versions de mise à niveau ;
une unité d'évaluation configurée pour évaluer si une opération de mise à niveau entrée selon l'invite de démarrage de mise à niveau est reçue ; et
une quatrième unité de mise à niveau configurée pour, si l'opération de mise à niveau est reçue, réaliser l'étape de sélection d'une version de mise à niveau proche de la version actuelle en tant que version de référence et mettre à niveau la version actuelle vers la version de référence en utilisant le fichier de mise à niveau correspondant à la version de référence.

9. Appareil selon la revendication 7, dans lequel l'appareil comprend en outre :
une seconde unité de génération configurée pour, si la version actuelle est mise à niveau vers la version cible, générer une invite de succès de mise à niveau ; et
une unité d'affichage configurée pour afficher l'invite de succès de mise à niveau ;
l'unité d'affichage comprenant :
une première sous-unité d'affichage configurée pour afficher l'invite de succès de mise à niveau dans une interface d'affichage locale ; et
une seconde sous-unité d'affichage configurée pour pousser l'invite de succès de mise à niveau vers un terminal mobile prédéfini, de sorte que l'invite de succès de mise à niveau soit affichée sur le terminal mobile prédéfini.

10. Appareil selon la revendication 7, dans lequel l'unité d'acquisition (21) comprend :
une première sous-unité de détection configurée pour détecter si la version actuelle nécessite une mise à jour ;
une première sous-unité de génération configurée pour, si la version actuelle nécessite une mise à jour, générer une invite de mise à jour de version, l'invite de mise à jour de version étant affichée pour un utilisateur sur une interface d'affichage ;
une première sous-unité d'évaluation configurée pour évaluer si une opération de mise à jour entrée par l'utilisateur selon l'invite de mise à jour de version est reçue ;
une seconde sous-unité de génération configurée pour, si l'opération de mise à jour est reçue, générer une requête d'acquisition de fichiers de mise à niveau ;
une sous-unité d'envoi configurée pour envoyer la requête d'acquisition de fichiers de mise à niveau à un serveur ; et
une sous-unité de réception configurée pour recevoir les fichiers de mise à niveau qui correspondent à la pluralité de versions de mise à niveau plus récentes que la version actuelle et sont envoyés par le serveur selon la requête d'acquisition de fichiers de mise à niveau.

11. Produit programme d'ordinateur incluant des instructions pour l'exécution des étapes d'un procédé de mise à niveau selon l'une quelconque des revendications 1 à 6 lorsque lesdites instructions sont exécutées par un ordinateur.

12. Support d'enregistrement lisible par un ordinateur et ayant, enregistré sur celui-ci, un programme d'ordinateur incluant des instructions pour l'exécution des étapes d'un procédé de mise à niveau selon l'une quelconque des revendications 1 à 6.
